# EUROPÄISCHE PATENTANMELDUNG

(11) **EP 0 987 666 A1**
(43) Veröffentlichungstag der Anmeldung: **22.03.2000**
(21) Anmeldenummer: 99440221.2
(22) Anmeldetag: 06.08.1999
(51) Int. Cl.: G08G 1/0968

(54) **Verfahren zum Laden von Daten und Software in einem Fahrzeugcomputer**

(30) Priorität: 18.09.1998 DE 19842779
(71) Anmelder: ALCATEL, 75008 Paris (FR)
(72) Erfinder: Schiehser, Günter, 1190 Wien (AT); Weisbier, Peter, 1030 Wien (AT); Oster, Martin, 2202 Königsbrunn (AT); Patka, Heinz, 1220 Wien (AT)
(74) Vertreter: Brose, Gerhard, Dipl.-Ing.

(57) **Zusammenfassung**

Die Erfindung betrifft ein Verfahren zum Laden von Daten und Software in einen Fahrzeugcomputer (1), wobei zur Vereinfachung und Flexibilisierung vorgesehen ist, daß die Daten und die Software in Datenblöcke (5) strukturiert werden, daß der aktuelle Ladezustand des Fahrzeugcomputers (1) festgestellt wird und daß anhand des Ladezustandes die fehlenden und/oder auszutauschenden Datenblöcke (5) in den Fahrzeugcomputer (1). geladen werden.

## Beschreibung

Die Erfindung betrifft ein Verfahren zum Laden von Daten und Software in einen Fahrzeugcomputer, ein System zur Durchführung des Verfahrens und einen Download-Server.

Fahrzeugcomputer, auch Bordcomputer oder On-Board-Units, nachfolgend OBU genannt, dienen der automatischen Ausführung verschiedener Aktionen in Fahrzeugen des öffentlichen Verkehrs, wie beispielsweise Positionsbestimmung, Haltestellenansage oder Anzeige des Haltestellennamens. Dafür brauchen die OBUs Anwendungssoftware und Referenzdaten. Die Anwendungssoftware gibt die Art der Aktionen vor, während die Referenzdaten vorgesehene Fahrtrouten und Punkte für die Auslösung der Aktionen beinhalten. Um die Fahrzeugflotten optimal einzusetzen, sind häufig neue Anwendungssoftware und/oder Referenzdaten erforderlich. Falls beispielsweise ein Bus des öffentlichen Personennahverkehrs für eine andere Route eingesetzt werden soll, müssen die Referenzdaten des OBU entsprechend angepaßt werden. Nach bekannten Verfahren werden die Referenzdaten per Hand oder halbautomatisch, insbesondere mittels Memory-Cards, Infrarotbaken oder Laptop in das OBU geladen. Dieser Vorgang ist zeitaufwendig, kompliziert und umfaßt immer die Gesamtheit der Referenzdaten.

Der Erfindung liegt die Aufgabe zugrunde, ein Verfahren anzugeben, das eine schnellere, einfachere und vollautomatisch durchführbare Ladung des OBU gestattet.

Erfindungsgemäß wird die Aufgabe durch die kennzeichnenden Merkmale des Anspruchs 1 gelöst. Die Strukturierung der Daten und Software in einzelne Datenblöcke ermöglicht einen separaten Austausch einzelner Datenblöcke, so daß nicht zu ändernde Programmteile erhalten bleiben. Dadurch ergibt sich eine Vereinfachung des Ladevorganges. Beispielsweise kann eine Änderung der Fahrtroute durch selektives Laden der der Streckenänderung zugeordneten Teile der Referenzdaten durchgeführt werden. Insbesondere bei nur zeitweilig zu erwartenden Umleitungsstrecken oder bei sich nicht ändernden Teilstrecken der Gesamtroute wird somit nur ein Austausch der betroffenen Datenblöcke vorgenommen.

Zur Durchführung des Verfahrens ist gemäß Anspruch 2 ein Download-Server vorgesehen. Dieser initiiert anhand des festgestellten Ladezustandes des OBUs die Datenblock-Ladung der fehlenden oder auszutauschenden Datenblöcke.

Anspruch 3 charakterisiert eine vorteilhafte Ausführungsform der Datenblock-Struktur. Die Konfiguration CONFIG ID steht dabei für die fahrzeuginterne Ausstattung. Beispielsweise hat ein Fahrzeug ohne Haltestellenansage eine andere CONFIG ID als ein Fahrzeug mit einer solchen automatischen Ansage. Die Konfiguration CONFIG ID kann somit die Datenblock-Verwaltung erleichtern, da zu jeder CONFIG ID eine bestimmte Anzahl von Anwendungssoftware-Blöcken SWVERSION NR gehört. Zusätzlich können noch Betriebsdaten als Datenblock SIGNATURE gespeichert sein, welche nach Art der CONFIG ID als Auswahlkriterium für Referenzdaten DATAVERSION NR und/oder Anwendungssoftware SWVERSION NR herangezogen werden. Solche Betriebsdaten hängen von betrieblichen Erfordernissen ab und können zum Beispiel eine Fahrerkennung oder eine Fahrplankennung beinhalten. Auch wesentlich fein gegliedertere Datenblöcke wären denkbar. Insbesondere können die

Referenzdaten DATAVERSION NR und die Anwendungssoftware SWVERSION NR in weitere Blöcke aufgeteilt werden, die - wie oben beschrieben - einzeln ausgetauscht, gelöscht oder hinzugefügt werden können. Der Download-Server liest die Datenblöcke und entscheidet, welche Maßnahmen zur Aktualisierung des Daten- und Softwarebestandes erforderlich sind. Im einzelnen läuft dieser Vorgang folgendermaßen ab: der Download-Server liest beziehungsweise erkennt die vorhandenen Datenblöcke CONFIG ID, SWVERSION NR, DATAVERSION NR und SIGNATURE. In Abhängigkeit von der CONFIG ID wählt der Download-Server eine passende SWVERSION NR aus, wenn eine neue Software installiert werden soll und initiiert den Ladevorgang. Die Auswahl kann dabei durch einen Dispatcher oder auch automatisch anhand vorprogrammierter Parameter erfolgen. Falls neue Referenzdaten erforderlich sind, wird nach dem gleichen Prinzip ein neuer Datenblock DATAVERSION NR installiert, wobei hier CONFIG ID und SIGNATURE zur Auswahl des passenden Datenblocks als Auswahlkriterien berücksichtigt werden können.

Die bilaterale Informationsübermittlung zwischen dem OBU und dem Download-Server erfolgt gemäß Anspruch 4 vorzugsweise über drahtlose Kommunikation, wobei insbesondere der sehr preiswerte und vielseitig einsetzbare LAN-Funk (Local Area Network) zu bevorzugen ist.

Der Download-Server besteht in seinen Kernelementen im wesentlichen aus Computingmitteln gemäß Anspruch 5 und Bedienungsmitteln gemäß Anspruch 6. Die Bedienungsmittel, beispielsweise in Form einer Tastatur, werden von einem Dispatcher insbesondere zur Vorgabe der Datenblöcke genutzt.

Gemäß Anspruch 7 ist der Fahrzeugcomputer mit Mitteln zur Speicherung und Verwaltung der Datenblöcke ausgestattet. Dadurch ist gewährleistet, daß fehlende Datenblöcke einzeln hinzugenommen und "falsche" Datenblöcke einzeln ausgetauscht werden können.

Nachfolgend wird die Erfindung anhand eines figürlich dargestellten Ausführungsbeispiels näher erläutert.

Ein im Schema veranschaulichtes System zum Laden von Daten und Software in einen Fahrzeugcomputer besteht im wesentlichen aus einem On-Board-Unit (OBU) (1), einem Download-Server (2) und einer LAN-Verbindung (Local Area Network) (3) zwischen dem OBU (1) und dem Download-Server (2). Das OBU (1) ist üblicherweise in ein Fahrzeug (4) fest eingebaut. Denkbar wäre jedoch auch ein wechselnder Einsatzort des OBU (1). In letzterem Falle oder bei Änderungen aller Art, beispielsweise bezüglich Fahrtroute, Fahrzeugkonfiguration, Ausstattungsgrad und so weiter, muß das OBU (1) mit den richtigen Daten beziehungsweise der richtigen Software umprogrammiert werden. Dazu wird die Gesamtheit der Daten in einzelne Datenblöcke (5) aufgeteilt. Über die LAN-Verbindung (3) erfragt der Download-Server (2) den aktuellen Ladezustand, der im Ausführungsbeispiel durch vier Datenblöcke (5) gegeben ist. Vorgesehen sind die Datenblöcke CONFIG ID (5.1), SWVERSION NR (5.2), DATAVERSION NR (5.3) und SIGNATURE (5.4). CONFIG ID (5.1) enthält Informationen zur Fahrzeugkonfiguration, das heißt, zu den mittels des OBU (1) anzusteuernden Fahrzeugeinrichtungen, wie Haltestellenanzeige, Fahrscheinentwerter usw. SWVERSION NR (5.2) bestimmt die für die Ansteuerung erforderliche Software und DATAVERSION NR (5.3.1) die Referenzdaten der Fahrtroute. Zusätzlich sind noch Betriebsdaten wie Fahrer- oder Fahrplankennung in Form eines Datenblockes (5) SIGNATURE (5.4) vorgesehen. Anhand der Datenblöcke (5.1 - 5.4) erkennt der Download-Server (2), ob der derzeitige Ladezustand mit dem zukünftigen Einsatz des OBU (1) identisch ist. Falls das nicht der Fall ist und zum Beispiel eine geänderte Route befahren werden soll, ist eine andere DATAVERSION NR (5.3.1) erforderlich. Der Download-Server (2) identifiziert den richtigen Datablock DATAVERSION NR (5.3.1) für die neue Strecke in Abhängigkeit der Vorgaben durch CONFIG ID (5.1) und SIGNATURE (5.4). Diese fahrzeugspezifischen und betrieblichen Vorgaben bestimmen die Struktur der neuen Referenzdaten DATAVERSION NR (5.3.1). Zur Speicherung und Verwaltung der Datenblöcke (5) ist der Download-Server (2) mit Computingmitteln (6) ausgestattet. Weiterhin weist der Download-Server (2) Bedienungsmittel (7) zur Eingabe und/oder Auswahl und/oder Modifizierung der Datenblöcke (5) auf.

Die Erfindung beschränkt sich nicht auf das vorstehend angegebene Ausführungsbeispiel. Vielmehr ist eine Anzahl von Varianten denkbar, welche auch bei grundsätzlich anders gearteter Ausführung von den Merkmalen der Erfindung Gebrauch machen.

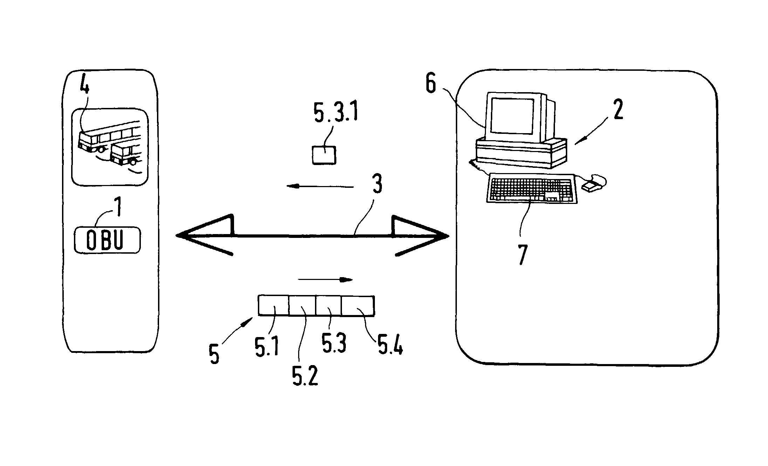

## Patentansprüche

1. Verfahren zum Laden von Daten und Software in einen Fahrzeugcomputer (1), dadurch gekennzeichnet, daß die Daten und die Software in Datenblöcke (5) strukturiert werden, daß der aktuelle Ladezustand des Fahrzeugcomputers (1) festgestellt wird und daß anhand des Ladezustandes die fehlenden und/oder auszutauschenden Datenblöcke (5) in den Fahrzeugcomputer (1) geladen werden.

2. System zur Durchführung des Verfahrens nach Anspruch 1, gekennzeichnet durch einen Download-Server (2) zur Ladung der anhand des Ladezustandes festgestellten fehlenden und/oder auszutauschenden Datenblöcke (5) in den Fahrzeugcomputer (1).

3. System nach Anspruch 2, gekennzeichnet durch Datenblöcke (5), welche umfassen:
• Konfigurationen des Fahrzeugcomputers (1) CONFIG ID (5.1),
• Anwendungssoftware SWVERSION NR (5.2),
• Referenzdaten DATAVERSION NR (5.3; 5.31) und gegebenenfalls
• Betriebsdaten SIGNATURE (5.4).

4. System nach Anspruch 2 oder 3, dadurch gekennzeichnet, daß der Fahrzeugcomputer (1) und der Download-Server (2) Mittel zur drahtlosen Kommunikation, insbesondere via LAN (Local Area Network)-Funk (3) oder IR (Infra-Rot)-Baken, aufweisen.

5. Download-Server (2) nach einem der Ansprüche 2 bis 4, gekennzeichnet durch Computingmittel (6) zur Speicherung und Verwaltung der Datenblöcke (5).

6. Download-Server (2) nach einem der Ansprüche 2 bis 5, gekennzeichnet durch Bedienungsmittel (7) zur Eingabe und/oder Auswahl und/oder Modifizierung der Datenblöcke (5).

7. Fahrzeugcomputer (1) nach einem der Ansprüche 2 bis 6, gekennzeichnet durch Mittel zur Speicherung und Verwaltung der Datenblöcke (5).
